Europäisches Patentamt

European Patent Office

Office européen des brevets

(11) Publication number: **0 059 772**
**B1**

(12) **EUROPEAN PATENT SPECIFICATION**

(45) Date of publication of patent specification: **04.12.85**

(51) Int. Cl.⁴: **C 10 G 9/38, C 10 G 47/22**

(21) Application number: **81101700.3**

(22) Date of filing: **09.03.81**

(54) **Crude oil cracking using partial combustion gases.**

(43) Date of publication of application:
**15.09.82 Bulletin 82/37**

(45) Publication of the grant of the patent:
**04.12.85 Bulletin 85/49**

(84) Designated Contracting States:
**BE DE FR GB NL**

(56) References cited:
**GB-A- 823 956**
**GB-A- 921 305**
**US-A-2 377 847**
**US-A-2 698 830**
**US-A-4 134 824**

(73) Proprietor: **THE DOW CHEMICAL COMPANY**
**2030 Dow Center Abbott Road P.O. Box 1967**
**Midland, MI 48640 (US)**

(72) Inventor: **Read, Arthur Edwin, Jr.**
**56 Caladium Court**
**Lake Jackson Texas (US)**
Inventor: **Wing, Milton Silas**
**108 Lazy Lane**
**Lake Jackson Texas (US)**
Inventor: **Hancock, William Pinkney, Jr.**
**239 Pecan Drive**
**Brazoria Texas (US)**

(74) Representative: **Casalonga, Axel et al**
**BUREAU D.A. CASALONGA OFFICE JOSSE &**
**PETIT Baaderstrasse 12-14**
**D-8000 München 5 (DE)**

EP 0 059 772 B1

Courier Press, Leamington Spa, England.

# 0 059 772

**Description**

This invention relates to a process for the cracking of crude oil using partial combustion gases wherein superheated steam, crude oil and oxygen are injected into a partial combustion zone at one or more points.

It is known in the prior art that crude oil and other hydrocarbon fractions may be thermally cracked by mixing superheated steam and the oil together and allowing the pyrolysis to proceed adiabatically. These processes allow crude and heavy hydrocarbon fractions, which would foul conventional tubes, to be cracked and have the advantage that the steam diluent and heat carrier may be readily condensed from the products and a savings is thereby made as only the product gases need to be compressed for separation. Among the disadvantages of these processes are expense associated with the generation of the superheated steam in the 1699°C to 2000°C range generally required. Also among the by-products formed in the cracking process are heavy aromatic liquids and coke which foul reactors and heat exchangers and which contain high quantities of sulfur and metals which must be disposed of. Some of the problems associated with the generation of superheated steam have apparently been solved by using a hydrogen burner to generate high temperature gases, but the yields that may be obtained in this manner are still low and the by-products still remain a problem.

Other processes for pyrolysis of heavy hydrocarbons involve the use of a partial or complete combustion burner, where the crude oil or fraction thereof to be cracked is sprayed into the hot gases from the burner. These processes avoid some of the problems associated with the generation of high temperature steam and (when partial combustion is used) also produce hydrogen gas which lowers the heat required for cracking, increases ethylene yield, and aromatics yield, and reduces coke formation.

The main disadvantage of these processes is that large quantities of non-condensible gases (expecially carbon monoxide) are produced, which must be compressed to be removed. This involves a considerable cost for large compressors and large size separation equipment.

In U.S. Patent 4,134,824, issued to Kamm et al., January 16, 1979, a process is disclosed in which crude oil is first distilled to separate asphaltic components. The distillate is then cracked using partial combustion gases from a methane burner to generate ethylene. With recycling of the asphaltic components to the burner. This process uses a high fuel to oxidant ratio, and does not generate $H_2$ *in situ*. No shift reaction reducing gas is produced.

It has been discovered that when a partial combustion burner is used to generate hydrogen, carbon monoxide, carbon dioxide, and water, and superheated or shift steam is injected into the burner or combustion gases, the superheated steam is additionally heated to a higher temperature and much of the CO produced in the burner is reacted with the steam by the shift reaction to produce greater quantities of $CO_2$ and $H_2$. This has the advantage that the benefits of hydrogen in the cracking process are realized while most of the CO, which is difficult to remove, is converted to $CO_2$ which can be readily scrubbed from the product gases with conventional acid gas absorbents such as caustic solutions of alkanolamine solutions.

When crude oil or crude oil fractions are injected into this hydrogen-enriched gaseous mixture, the yield of the desired olefins and aromatics is increased over the use of superheated steam alone while the formation of coke or coke deposits is virtually eliminated. The use of this invention reduces the volume of off-gases to be processed as compared to the use of partial combustion cracking alone.

Additionally, it has been found that if the heavy oils which are generated in the processes are used as fuel for the partial combustion burner, any sulfur compounds contained therein are converted mainly to hydrogen sulfide, and a smaller amount to carbonyl sulfide which may be scrubbed out using known techniques. This has the unique advantage that it allows a waste stream of residual oils, which may not be suitable for burning in air because of restrictions on sulfur emissions, to be used as some or all of the total fuel required to operate the process.

The present invention is a process for the cracking of crude oils or high boiling fractions thereof to obtain a mixture of lower hydrocarbons with a high proportion of ethylene characterized by:

(1) partially burning a carbonaceous fuel with an oxidizing gas and process steam in a partial combustion zone to form a mixture of hot combustion gases having an average temperature in the range from 1200°C to 2200°C and containing more than 5 volume percent carbon monoxide;

(2) injecting superheated steam into said combustion gases in a shift reaction zone having an average temperature in the range from 1200°C to 1800°C react with said carbon monoxide to form a gaseous mixture containing more than 5 volume percent hydrogen and carbon dioxide;

(3) injecting said crude oils or fractions thereof into said steam-hydrogen mixture in a cracking zone having an average temperature in the range of from 600°C to 1500°C under time and temperature conditions which crack the crude oils or fractions thereof into gaseous products and favor the formation of ethylene; and

(4) quenching the gaseous products with a hydrocarbon quench oil.

Another aspect of the invention is a method for the partial combustion cracking of crude oil or high boiling crude oil fractions whereby a heavy recycle oil is recovered by quenching the gaseous products from the cracking step and this heavy recycle oil is recycled for use as a quench oil and/or use as a fuel or fuel supplement.

2

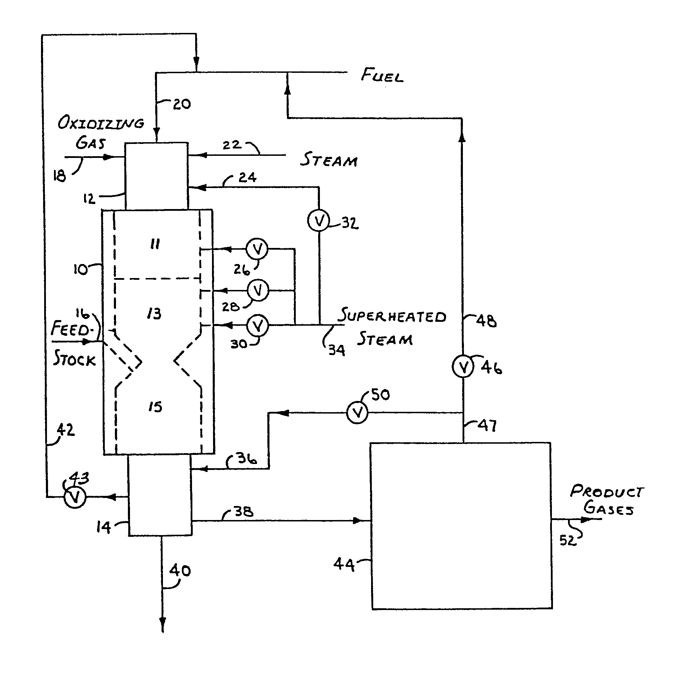

The present invention is illustrated by the drawing which is a schematic diagram showing the association of the reactor 10, the burner assembly 12, and the quench apparatus 14 together with the separation equipment 44.

In the drawing, a reactor assembly 10 is shown which has three zones comprising the partial combustion zone 11, a shift reaction zone 13 and a cracking zone 15, respectively. The reactor assembly is conventional and is illustrated by U.S. Patent 2,698,830, issued to Jenny, January 4, 1955.

A burner 12 is fed with oxygen or oxygen-enriched air through conduit 18. A hydrocarbon fuel and steam are supplied to the burner through conduit 20 and a steam inlet conduit 22, respectively. The process or saturated steam used in conduit 22 preferably has a pressure of from about (50 to 250 pounds per square inch) $3.53$—$17.7$ kg/cm$^2$ and a temperature of about 150°C to 210°C. This steam is used to mix and atomize the hydrocarbon feed in the burner 12.

Conduit 34 supplies superheated steam to the reactor 10 and/or the burner 12. This superheated steam generally has a pressure of from about (5 to 50 psig) $0.35$—$3.53$ kg/cm$^2$ and a temperature of about 700°C to 1100°C. The superheated steam is supplied from a conventional superheater (not shown). The flow of superheated steam is controlled by valves 26, 28, 30 and 32, associated with conduit 24.

Conduit 16 supplies crude oil or high boiling crude oil fractions, i.e., residuums to the cracking zone 15 in the reactor 10. The crude oil is stored in a supply tank (now shown) and is heated by preheater (not shown) to a temperature of about 30°C to 260°C, depending upon the crude oil, to a flowable viscosity for use.

Cracked hydrocarbons from the reactor 10 are then quenched with a quench oil in quench apparatus 14. The quench apparatus can be of any well-known type, but a falling film quench apparatus is preferred. Hydrocarbon gases are removed through conduit 38 and tars and heavy oils are removed through conduit 40 and fed to the burner 12 by a conduit (not shown).

Outlet conduit 42 is provided to recycle quench oil back to the fuel conduit 20. The flow of the quench oil to the fuel conduit 20 is controlled and/or regulated by valve 43. Thus, if or when a surplus of quench oil is generated during the process, it can be used as fuel to make the process partially or wholly self-sustaining.

Hydrocarbon gases leave the quench apparatus 14 through conduit 38 and enter into the separation apparatus 44 which consists of conventional fractionators or condensors, as shown in U.S. Patent 2,698,830, previously identified. The desired lower hydrocarbon gases such as ethylene and propylene, are removed by conduit 52.

Light oils from the separation apparatus 44 are pumped by a pump (not shown) through conduit 47 where they diverge through conduits 36 and 48 to supply quench oil to the quench apparatus 14 and the fuel conduit 20, respectively. The flow of the light oils is controlled by valves 46 and 50. Valve 50 controls the flow back to the quench apparatus 14 and valve 46 controls the flow to the fuel conduit 20.

The temperature of the partial combustion zone is controlled so as to have an average temperature in the range from 1200°C to 2200°C and preferably from 1600°C to 2000°C. The average temperature in the shift reaction zone is in the range from 1200°C to 1800°C and preferably 1300°C to 1600°C. The average temperature in the cracking reaction zone is in the range from 600°C to 1500°C and preferably 700°C to 1100°C. The foregoing average temperatures represent the estimated average temperatures of the top and the bottom of each of the respective zones. Since there are no known temperature probes which can be inserted to directly read these temperatures, due to the high temperatures and high erosion, the same information can be restated by indicating the outlet temperatures which are measured on the outside of the respective zones. Thus, for the partial combustion zone the outlet temperature is preferably at least 1700°C. In the shift reaction zone the outlet temperature is preferably at least 1100°C and the cracking reactor zone has a preferred outlet temperature of at least 600°C.

In the partial combustion zone, care should be exercised to insure that the average temperature is not lower than 1200°C since the rate of combustion is too slow and inefficient, which results in more carbon and methane formation. Further, the upper limit should not be exceeded since the high temperatures will damage the refractory linings of the reactor.

In the shift reaction zone, the average temperature should be kept above 1200°C since below that temperature there is no significant shift reaction rate, i.e., conversion of CO and $H_2O$ to $H_2$ and $CO_2$. The upper temperature range is limited by the fact that it represents the highest temperature that is known to be obtained under the conditions of this invention.

In the cracking zone, the average temperature should be kept above 600°C since there is no significant cracking below this temperature. Above 1500°C it has been found that very short residence times are required and that more acetylene and less ethylene are produced.

The hot combustion gases resulting from the partial combustion contain more than 5 volume percent CO and preferably in the range of 6 to 60 volume percent.

The gaseous shift mixture contains more than 5 volume percent $H_2$ and preferably in the range of 6 to 70 volume percent.

The actual composition of these combustion gases can vary considerably depending upon (1) the type of fuel being used, (2) the relative amount of oxidizer to fuel, and (3) the amount of moderating steam used to protect the refractory lining of the reactor. This flexibility of composition allows the maximum or optimum conditions for each case to be developed on an individual basis. For instance, if a heavy oil or

3

**0 059 772**

residue is being cracked there will probably be enough excess (quench oil) heavy cracked oil produced to operate the burner, thus usually a considerable quantity of CO would be present in the burner gas. But, if a relatively low molecular weight paraffinic feedstock is being cracked, not enough heavy cracked oil may be produced to sustain the burner, so that some of the light gas ($H_2+CH_4$) produced from the pyrolysis is used in the burner, which results in more hydrogen and less CO being present.

For the invention to function it is only necessary that the minimum conditions be met, and the preferred range or volumes will vary depending upon the factors listed above.

The weight ratio of oxygen to fuel used in the burner in the process of this invention for partial combustion is greater than about 1.2:1. The upper limit should not exceed about 2.9:1. This upper limit will vary somewhat depending upon the carbon-hydrogen ratio of the fuel.

The weight ratio of process steam to fuel is normally in the range from about 0.5:1 to 10:1. The use of this ratio is not critical since the process steam is used primarily to control the temperature in the combustion zone, and the above ratios are dependent upon the quantity of oxygen used.

The weight ratio of superheated steam used to burner fuel is in the range from about 2.0:1 to 8.0:1. It has been found that the use of a ratio below this weight ratio results in a poor shift reaction since too little superheated steam is present, whereas the use of a ratio above this weight ratio will cool the cracking reaction and slow down the desired shift reaction.

The crude oil or fractions thereof is sprayed or injected into the cracking zone at a ratio from about 0.5 to 8.0 parts by weight of oil per part by weight of fuel and preferably 1.5 to 6.0 parts by weight of oil per part by weight of fuel to give a residence time from about 0.01 to 1.0 seconds in the reactor and preferably 0.05 to 0.5 seconds.

The oxidizing gas used in the partial combustion zone can be pure oxygen, or air enriched with oxygen.

The fuel which is burned in the partial combustion zone can be any one of the known fuel oils, cracked oils, or a mixture of fuel oils and cracked oils, natural gas, or cracked gases.

The pressure range for the reactor during combustion is in the range from (0—200 psig) 0—14.1 kg/cm² and preferably in the range from (5—65 psig) 0.35—4.59 kg/cm².

The invention is illustrated by the following examples:

Example 1

Using the apparatus disclosed in the drawing and the process of the present invention, the following reactants were processed under the given conditions:

| | |
|---|---|
| Fuel: 30° API Domestic Crude | (100 lb/hr) 45.3 kg/hr |
| Oxidant: Oxygen | (184 lb/hr) 83.5 kg/hr |
| Process steam (200°C) to burner: | (180 lb/hr) 81.6 kg/hr |
| Shift steam: | (549 lb/hr) 248 kg/hr |
| Cracking stock: 30° API Domestic Crude | (223 lb/hr) 101 kg/hr |
| Conditions: Reactor Pressure | (11.1 psig) 0.78 kg/cm² |
| Temperature Partial Combustion Zone | 1910°C |
| Shift Steam Inlet Temp. | 905°C |
| Shift Steam Inlet | Into top of Shift Zone |
| Temperature of Shift Zone Outlet | 1210°C |
| Temperature of Cracking Reactor Outlet | 696°C |
| Reactor Volume | (1.64 ft³) 46.4 l |
| Residence Time | 0.15 seconds |

4

# 0 059 772

The following yields in pounds (kg) were obtained per 100 pounds (45.3 kg) of cracking stock.

| | | | | | | |
|---|---|---|---|---|---|---|
| $H_2$ | (3.1) | 1.4 | | $C_3H_4$ | (1.1) | 0.50 |
| CO | (5.7) | 2.58 | | $C_3H_6$ | (8.8) | 3.98 |
| $CH_4$ | (14.1) | 6.40 | | $C_4$ | (5.0) | 2.27 |
| $CO_2$ | (3.0) | 1.36 | | $C_5$ | (3.8) | 1.72 |
| $H_2S$ | (0.2) | 0.09 | | Benzene | (8.3) | 3.76 |
| $C_2H_2$ | (1.9) | 0.86 | | Toluene | (4.5) | 2.04 |
| $C_2H_4$ | (24.8) | 11.3 | | $C_6+$* | (20.5) | 9.31 |
| $C_2H_6$ | (1.6) | 0.73 | | | | |

*$C_6+$includes all carbon compounds of $C_6$ or greater except benzene and toluene.

Example 2

Using the same apparatus as in Example 1 and the process of the present invention, the following reactants were reacted in a continuous manner:

| | Based on (100 lb) (45.3 kg/hr) fuel/hr |
|---|---|
| Fuel: Heavy recycle oil or quench oil from Example 1 | (100 lb/hr) 45.3 kg/hr |
| Oxidant: Oxygen | (188 lb/hr) 85.3 kg/hr |
| Process steam (200°C) to burner: | (240 lb/hr) 108 kg/hr |
| Shift steam: | (311 lb/hr) 141 kg/hr |
| Cracking stock: 30° API Domestic Crude | (220 lb/hr) 99.8 kg/hr |
| Conditions: Reactor Pressure | (6.1 psig) 0.42 kg/cm² |
| Temperature Partial Combustion Zone | 1903°C |
| Shift Steam Inlet Temp. | 870°C |
| Shift Steam Inlet | Into top of Shift Zone |
| Temperature of Shift Zone Outlet | 1163°C |
| Temperature of Cracking Reactor Outlet | 697°C |
| Reactor Volume | (1.64 ft³) 46.4 l |
| Residence Time | 0.21 seconds |

5

The following yields in pounds (kg) were obtained per 100 pounds (45.3 kg) of cracking stock.

| | | | | | | |
|---|---|---|---|---|---|---|
| $H_2$ | (1.3) | 0.59 | | $C_3H_4$ | (0.9) | 0.41 |
| CO | (3.9) | 1.76 | | $C_3H_6$ | (7.3) | 3.31 |
| $CH_4$ | (11.3) | 5.12 | | $C_4$ | (6.2) | 2.81 |
| $CO_2$ | (5.2) | 2.36 | | $C_5$ | (1.9) | 0.86 |
| $H_2S$ | (0.2) | 0.09 | | Benzene | (7.2) | 3.26 |
| $C_2H_2$ | (2.5) | 1.13 | | Toluene | (5.2) | 2.36 |
| $C_2H_4$ | (20.7) | 9.38 | | $C_6+^*$ | (25.0) | 11.3 |
| $C_2H_6$ | (1.4) | 0.64 | | | | |

*$C_6+$includes all carbon compounds of $C_6$ or greater except benzene and toluene.

Control—Total combustion with superheated steam

(49 Pounds) 22 kg of fuel oil were burned per hour with (145 pounds) 65.8 kg of oxygen per hour which resulted in essentially complete combustion of the fuel oil to $CO_2$ and $H_2O$. Additionally, (306 pounds) 139 kg of 200°C process steam was added to the burner to maintain the temperature below 1900°C. The resulting gaseous mixture was combined with (300 pounds) 136 kg of steam per hour which had been superheated to 870°C to yield a gaseous heat carrier containing in volume percentages 0.6 $H_2$; 0.3 CO; 8.9 $CO_2$; and 90.2 $H_2O$ at a temperature of 1460°C.

Into this gaseous heat carrier, (158 pounds) 71.8 kg per hour of vacuum gas oil (650°F—1050°F) 343°C—566°C boiling range) was sprayed using (75 pounds) 34.0 kg of 200°C process steam per hour for atomization. The yield of products are shown in Table I.

Example 3

(82 Pounds) 37.2 kg per hour of fuel oil were burned with (163 pounds) 74.0 kg, of oxygen per hour. Additionally, (255 pounds) 116 kg per hour of 200°C process steam was added to maintain the flame temperature below 1900°C. This mixture was deficient in oxygen and resulted in the partial combustion of the fuel. The gaseous mixture contained substantial portions of CO and $H_2$ in addition to $CO_2$ and $H_2O$. The volume percentages in the gaseous mixture were 12.5 $H_2$; 12.5 CO; 11.2 $CO_2$; and 63.4 $H_2O$.

The resulting gaseous mixture was combined with (300 pounds) 136 kg per hour of steam which had been superheated to 870°C. At these conditions with a residence time sufficient to achieve equilibrium, 30 percent of the CO present was converted to $CO_2$ with a corresponding increase in $H_2$ content.

The resulting gaseous heat carrier had a temperature of 1460°C and consisted of (volume percentages) 9.8 $H_2$; 5.3 CO; 8.9 $CO_2$; and 75.9 $H_2O$.

Into this gaseous heat carrier (158 pounds) 71.8 kg per hour of vacuum gas oil was sprayed using (75 pounds) 34.0 kg per hour of process steam (200°C). The yields of products are shown in Table I. It is to be noted that the yield of ethylene is increased about 28 percent over the control and thus the injection of superheated steam into the partial combustion gases is highly effective to increase the yield of ethylene.

A detailed comparison of Example 3 and the control is shown in Table II.

TABLE I

Yields in (pounds) kg per (100 pounds) 45.3 kg of feedstock

|  | Control | | Example 3 | |
| --- | --- | --- | --- | --- |
| $H_2$ | (1.7) | 0.77 | (1.0) | 0.45 |
| CO | (5.0) | 2.27 | (3.0) | 1.36 |
| $CH_4$ | (10.3) | 4.68 | (13.7) | 6.20 |
| $CO_2$ | (0.2) | 0.09 | (2.4) | 1.09 |
| $H_2S$ | (0.7) | 0.32 | (1.1) | 0.50 |
| $C_2H_2$ | (2.7) | 1.22 | (2.7) | 1.22 |
| $C_2H_4$ | (20.9) | 9.48 | (26.8) | 12.2 |
| $C_2H_6$ | (1.0) | 0.45 | (1.1) | 0.50 |
| $C_3H_4$ | (0.8) | 0.36 | (0.9) | 0.41 |
| $C_3H_6$ | (4.3) | 1.95 | (5.8) | 2.63 |
| $C_4$ | (3.0) | 1.36 | (4.0) | 1.82 |
| $C_5$ | (1.2) | 0.54 | (1.3) | 0.59 |
| Benzene | (7.5) | 3.40 | (8.0) | 3.62 |
| Toluene | (4.7) | 2.13 | (3.0) | 1.36 |
| $C_6+$ | (39.6) | 17.5 | (29.3) | 13.3 |

7

**0 059 772**

TABLE II

| | Control | | Example 3 | |
|---|---|---|---|---|
| Fuel. (lb/hr) kg | (49) | 22.0 | (82) | 37.2 |
| Oxygen, (lb/hr) kg | (145) | 65.8 | (163) | 74.0 |
| 200°C Steam, (lb/hr) kg/hr | (306) | 139.0 | (255) | 116.0 |
| Combustion Temp. °C | 1900 | | 1900 | |
| 870°C Steam, (lb/hr) kg/hr | (300) | 136.0 | (300) | 136.0 |
| Total lb Carrier Gas kg | (800) | 362.0 | (800) | 362.0 |
| Temp. of Carrier Gas, °C | 1460 | | 1460 | |
| Feedstock, (lb/hr) kg | (158) | 71.8 | (158) | 71.8 |

| Products, (lb/hr) (kg) | | | | |
|---|---|---|---|---|
| $H_2$ | (2.7) | 1.22 | (9.6) | 4.35 |
| CO | (8.7) | 3.94 | (44.4) | 22.0 |
| $CO_2$ | (161.2) | 73.0 | (181.0) | 82.2 |
| $CH_4$ | (16.3) | 7.39 | (21.7) | 9.84 |
| $C_2H_2$ | (4.2) | 1.90 | (4.1) | 1.86 |
| $C_2H_4$ | (33.0) | 15.0 | (42.3) | 19.2 |
| $C_2H_6$ | (1.5) | 0.68 | (1.8) | 0.81 |
| $C_3H_4$ | (1.3) | 0.59 | (1.4) | 0.63 |
| $C_3H_6$ | (6.8) | 3.08 | (9.1) | 4.11 |
| $C_4+$ | (83.1) | 37.6 | (73.8) | 33.4 |
| $H_2O$ | (638.1) | 289 | (567.0) | 257 |
| $H_2S$ | (1.1) | 0.50 | (1.7) | 0.77 |

**Claims**

1. A process for the cracking of crude oils or high boiling fractions thereof to obtain a mixture of lower hydrocarbons with a high proportion of ethylene characterized by:

(1) partially burning a carbonaceous fuel with an oxidizing gas and process steam in a partial combustion zone to form a mixture of hot combustion gases having an average temperature in the range from 1200°C to 2200°C and containing more than 5 volume percent carbon monoxide;

(2) injecting superheated steam into said combustion gases in a shift reaction zone having an average temperature in the range from 1200°C to 1800°C react with said carbon monoxide to form a gaseous mixture containing more than 5 volume percent hydrogen and carbon dioxide;

(3) injecting said crude oils or fractions thereof into said steam-hydrogen mixture in a cracking zone having an average temperature in the range of from 600°C to 1500°C under time and temperature conditions which crack the crude oils or fractions thereof into gaseous products and favor the formation of ethylene; and

(4) quenching the gaseous products with a hydrocarbon quench oil.

2. The process as set forth in claim 1 wherein, the average temperature in the shift reaction zone is in the range of 1300°C to 1600°C.

8

## 0 059 772

3. The process as set forth in Claim 1 wherein the weight ratio of superheated steam to fuel is in the range of 2:1 to 8:1.

4. The process as set forth in Claim 1 wherein the crude oils or fractions thereof are cracked at a temperature in the range from 700°C to 1100°C and have a residence time of 0,05 to 0,5 second.

5. The process of Claim 1 wherein said carbonaceous fuel is a hydrocarbon oil.

6. The process of Claim 1 wherein a portion of said quench oil is recycled to the quench zone and a second portion is recycled to said combustion zone and is blended with said hydrocarbon oil.


**Patentansprüche**

1. Krackungsverfahren von Rohölen oder deren hochsiedenden Fraktionen zur Herstellung eines Gemisches von niedrigen Kohlenwasserstoffen mit einem hohen Anteil en Äthylen dadurch gekennzeichnet:

(1) unvollständige Verbrennung von kohlenstoffhaltigem Brennstoff mit einem oxydierendem Gas und Betriebsdampf in einer Zone mit unvollständiger Verbrennung zur Bildung eines Gemisches aus heißen Verbrennungsgasen, welche eine mittlere Temperatur von 1200 Grad C bis 2200 Grad C haben und mehr als 5 Volumenprozent Kohlenmonoxyd enthalten;

(2) Einspritzen von überhitztem Dampf in die genannten Verbrennungsgase in einer beweglichen Reaktionszone, welche eine mittlere Temperatur im Bereich von 1200 Grad C bis 1800 Grad C hat und mit dem genannten Kohlenmonoxyd reagiert um ein Gasgemisch enthaltend mehr als 5 Volumenprozent Wasserstoff und Kohlendioxyd zu erhalten;

(3) Einspritzen des genannten Rohöls oder dessen Fraktionen in das genannte Dampf-Wasserstoff-Gemisch in der Crackzone, welche eine mittlere Temperatur im Bereich von 600 Grad C bis 1500 Grad C hat, bei Zeit- und Temperaturbedingungen, welche die Rohöle oder deren Fraktionen zu gasformigen Produkten cracken und die Bildung von Äthylen begünstigen; und

(4) Ablöschen der gasformigen Produkte mit Kühlöl aus Kohlenwasserstoff.


2. Verfahren nach Anspruch 1, wobei die mittlere Temperatur in der beweglichen Reaktionszone im Bereich von 1300 Grad C bis 1600 Grad C liegt.

3. Verfahren nach Anspruch 1, wobei das Gewichtsverhältnis zwischen Überhitztem Dampf und Brennstoff im Bereich von 2:1 bis 8:1 liegt.

4. Verfahren nach Anspruch 1, wobei die Rohöle oder deren Fraktionen bei einer Temperatur im Bereich von 700 Grad C und 1100 Grad C gecrackt werden und eine Verweilzeit von 0,05 bis 0,5 Sekunden haben.

5. Verfahren nach Anspruch 1, wobei der gennante Kohlenstoffhaltige Brennstoff ein Öl aus Kohlenwasserstoffen ist.

6. Verfahren nach Anspruch 1, wobei ein Teil des genannten Kühlöls zu der Kühlzone rezirkuliert wird und ein zweiter Teil zu der genannten Verbrennungszone rezirkuliert wird und mit dem genannten Kohlenwasserstofföl vermischt wird.


**Revendications**

1. Procédé de craquage d'huiles brutes ou de leurs fractions à point d'ébullition élevé pour obtenir un mélange d'hydrocarbures inférieurs avec une proportion importante d'éthylène caractérisé en ce que:

(1) un brüle partiellement un combustible carboné avec un gaz oxydant et de la vapeur de traitement dans une zone de combustion partielle pour former un mélange de gaz de combustion chauds possèdant une température moyenne comprise dans l'intervalle de 1200°C à 2200°C et contenant plus de 5 pour cent en volume d'oxyde de carbone;

(2) on injecte de la vapeur surchauffée dans lesdits gaz de combustion dans une zone de réaction de conversion possèdant une température moyenne comprise dans l'intervalle de 1200°C à 1800°C ou elle réagit avec ledit oxyde de carbone pour former un mélange gazeux contenant plus de 5 pour cent en volume d'hydrogène et de gaz carbonique;

(3) on injecte lesdites huiles brutes ou leurs fractions dans ledit mélange vapeur-hydrogène dans une zone de craquage possèdant une température moyenne comprise dans l'intervalle de 600°C à 1500°C dans des conditions de durée et de température qui permettent le craquage des huiles brutes ou de leurs fractions en produits gazeux et favorisent la formation d'éthylène; et

(4) on refroidit les produits gazeux avec une huile de trempe d'hydrocarbures.


2. Procédé selon la revendication 1, dans lequel la température moyenne dans la zone de réaction de conversion est comprise dans l'intervalle de 1300°C à 1600°C.

3. Procédé selon la revendication 1, dans lequel le rapport pondéral de la vapeur surchauffée au combustible est compris dans l'intervalle de 2:1 à 8:1.

9

4. Procédé selon la revendication 1, dans lequel les huiles brutes ou leurs fractions sont craquées à une température comprise dans l'intervalle de 700°C à 1100°C et ont un temps de séjour de 0,05 à 0,5 seconde.

5. Procédé selon la revendication 1, dans lequel ledit combustible carboné est une huile d'hydrocarbures.

6. Procédé selon la revendication 1, dans lequel une portion de ladite huile de trempe est recyclée vers la zone de refroidissement et une seconde portion est recyclée vers ladite zone de combustion et est mélangée avec ladite huile d'hydrocarbures.